# EUROPEAN PATENT SPECIFICATION

(11) **EP 3 816 310 B1**
(45) Date of publication and mention of the grant of the patent: **20.11.2024**
(21) Application number: 19790416.2
(22) Date of filing: 08.05.2019
(51) Int. Cl.: C22C 9/02, F16C 33/12, F16C 33/14, B22F 7/04, C23C 4/06

(54) **BRONZE ALLOY, AND SLIDING MEMBER USING SAID BRONZE ALLOY**
BRONZELEGIERUNG UND GLEITELEMENT MIT DIESER BRONZELEGIERUNG
ALLIAGE DE BRONZE ET ÉLÉMENT COULISSANT UTILISANT LEDIT ALLIAGE DE BRONZE

(30) Priority: 26.12.2018 WO PCT/JP2018/047938
(43) Date of publication of application: 05.05.2021
(73) Proprietor: Akashi Gohdoh Inc., Hakusan-shi, Ishikawa 924-0011 (JP)
(72) Inventor: FUNAKI, Katsuyuki, Ishikawa 9240011 (JP); KOIZUMI, Shogo, Ishikawa 9240011 (JP); AKASHI Takafumi, Ishikawa 9240011 (JP)
(74) Representative: Isarpatent
(86) International application number: PCT/JP2019/018323
(87) International publication number: WO 2020/136935

(56) References cited:
- EP-A1- 2 558 617
- EP-B1- 2 558 617
- WO-A1-2010/030031
- JP-A- 2006 022 896
- JP-A- 2006 022 896
- JP-A- H11 293 305
- JP-B2- 4 806 823
- KR-B1- 100 940 593
- US-A1- 2012 121 455
- US-A1- 2015 369 287
- US-B2- 8 900 721

## Description

### Technical Field

The present invention relates to a bronze alloy sliding member such as an axial piston type hydraulic pump or a motor cylinder block which is used at a high pressure and a high speed, and relates to a bronze alloy excellent in seizure resistance and frictional wear property while having a lead-free composition, and further relates to a multi-layer sliding member having a sliding surface obtained by fusion-joining the bronze alloy with an iron-based material, or a sliding surface lined by melting only the bronze alloy using thermal spraying or the like.

### Background Art

In relation to hydraulic equipment, size reduction, pressure increasing, speeding up, and the like have been promoted, and hydraulic pumps, motor cylinder blocks, suspensions, bearings of transmissions, and the like are used under severe conditions. For example, in relation to an axial piston type hydraulic pump and a motor which are used in the construction machinery field such as a power shovel, a volume of auxiliary equipment such as a catalyst occupying a power chamber has increased to cope with emission regulation that is becoming stricter year by year. For this reason, the hydraulic pump cannot help but be miniaturized, but, if the miniaturized hydraulic pump is intended to have a discharge amount equivalent to the conventional amount, the hydraulic pump needs to be used at a high pressure exceeding 450 bar and a high rotation speed exceeding 3000 rpm.

Under this situation, in a sliding member such as a hydraulic pump to which a high surface pressure is applied, a combination of a nitrided steel piston and a cylinder block using a lead-bronze alloy as a sliding material is used to obtain a stable sliding property even under a severe condition as described above. As lightweight sliding members, multi-layer sliding members obtained by lining a copper alloy on a steel material have been also developed.

However, since the sliding member such as the cylinder block of the aforementioned hydraulic pump to which a high surface pressure is applied also requires a high seizure resistance, a lead-bronze containing about 10 mass% of lead is mainly used for the copper alloy in the marketed products. Lead contained in the copper alloy has a low affinity for both steel materials and copper alloys, and is an indispensable element for providing high seizure resistance and high wear resistance. When a lead content in the lead-bronze is reduced, the seizure resistance is lowered, and the lead-bronze cannot be used for a sliding member of a hydraulic equipment used under severe conditions.

On the other hand, from the viewpoint of environmental conservation, mainly in Europe, it has been considered to restrict a lead content in a copper alloy used for electric machines and industrial machine parts to 0.15% or lower. It is predicted that lead-free copper alloy sliding members will be used in the near future.

Under these circumstances, lead-free copper alloys for sliding have been studied in various fields, and various sliding materials for which sliding properties are improved while reducing a lead content have been proposed (Patent Documents 1 to 5).

Both technologies described in Patent Documents 1 and 2 relate to a multi-layer sliding material in which a Cu-Sn-based copper alloy (bronze) having a bismuth-based solid lubricating phase dispersed and precipitated in a base is joined with a steel plate by a powder sintering technology . These sliding materials are manufactured by powder sintering technologies, because, for example, a solid lubricating phase in a copper alloy tends to float up and separate due to a difference in specific gravity and thus is difficult to melt and mix, and a sufficient sliding property cannot be obtained without homogeneous dispersion. In powder sintering, it is necessary to prepare a molded body by press-molding using a mold after mixing raw material powders, and therefore powder sintering is suitable for an application of mass production of same-shaped products but unsuitable for industrial machine parts requiring multi-kind small-scale production, and particularly difficult to apply to manufacture of hydraulic pumps and hydraulic motors for construction machine application.

A technology described in Patent Document 3 is disclosed in relation to manufacture of a bronze alloy having seizure resistance comparable to that of lead-bronze while having a lead-free composition, and a sliding member using the bronze alloy, by simultaneously adding three elements Ni, Bi and sulfur to bronze to produce a copper sulfide in a base and to change a part of a metal structure into a layered eutectoid structure. However, a cast material of the bronze alloy has a drawback that a primary crystalline α-Cu greatly grows in a dendritic form and produces an inhomogeneous metal structure with the eutectoid structure, and microcracks are easily generated on a copper alloy sliding surface due to metal fatigue accumulation between the primary crystalline α and the eutectoid structure in an application of a high speed/high surface pressure sliding in which rotation on a thrust surface of a hydraulic motor or the like is frequently reversed.

The technology described in Patent Document 4 relates to a lead-free copper alloy for a casting used as a material for a faucet fitting, a joint faucet or the like, which may not be a suitable material from the viewpoint of achieving both wear resistance and seizure resistance at a high level. In the invention described in Patent Document 4, it is focused that e.g. a melting point of a produced copper sulfide is decreased than an initial crystallization temperature (solidification starting temperature) of copper by adding 3.5% or less of Bi, 0.5% or less of Fe, and 3.0% or less of Ni as described in paragraph [0018], and it is focused that machinability is improved by suppressing generation of cast cavities and producing sulfides. Also, the invention described in cited document 4 is directed to a lead-free copper alloy used as a material for a faucet fitting, a joint faucet or the like, and also in Examples, an Sn content of about 3 to 4% is mainly examined, and there is no consideration about wear resistance and seizure resistance.

Since a bronze casting material containing Sn as in Patent Document 5 has a very wide range of solidification temperature range, an α-solid solution having a high copper content crystallizes as an primary crystal in a solidification process, and the α-phase grows in a dendritic form while discharging Sn into a remaining liquid phase. Between dendrites having a high Sn concentration, a β-phase crystallizes, and eutectoid structures of α+δ phase are produced by a eutectoid reaction at about 520°C. Ni added to bronze dissolves in the δ-phase, decreases a formation free energy of the δ-phase, and promotes formation and growth of the δ-phase in the bronze alloy, and therefore a coarse δ-phase growing in a mesh form emerges in a metal structure. When sulfur is added to bronze compositional supercooling is enhanced in a solidification interface, and new homogeneous solidification nuclei are formed. The solidification nuclei individually start to grow to produce an α+fine δ eutectoid structure. Bi added to bronze is in a liquid phase state at a eutectoid reaction temperature and emerges so as to wet the surface of the precipitated fine δ-phase, and separates from the δ-phase along with progression of solidification to become fine particles in the eutectoid structure. Even when adding a small amount of Bi fine particles, a frictional wear property of a sliding surface is remarkably improved. Patent Document 6 describes a bronze alloy that includes copper, tin, bismuth, nickel and sulfur and is produced by use of the eutectoid transformation. The bronze alloy can be used as or be bonded to a sliding member. Patent Document 7 describes a double-layered bearing material consisting of a bearing alloy layer and a steel backing layer. The bearing alloy layer includes mainly Cu, and 0.5 to 12 mass% Sn and 0.5 to 5 mass% Fe. The bearing alloy layer may also include P and at least one of Ni and Ag, and Pb and Bi.

### Prior Art Documents

### Patent Documents

Patent Document 1: Japanese Patent Application Laid-Open No. 11-293305
Patent Document 2: Japanese Patent Application Laid-Open No. 2002-285262
Patent Document 3: WO2007/126006 A1
Patent Document 4: Japanese Patent Application Laid-Open No. 2007-297675
Patent Document 5: Japanese Patent No. 4806823
Patent Document 6: US 8900721 B2
Patent Document 7: JP 2006-22896 A Summary **ofInvention**

### Problem to be solved

Although the technology described in Patent Document 5 achieved excellent frictional wear property and seizure resistance by controlling the precipitation behavior of bronze during the eutectoid reaction by adding Ni, Bi and sulfur to bronze, the technology cannot suppress production of an inhomogeneous metal structure with respect to the eutectoid structure associated with growth of the dendrites in the primary crystalline α. With a bronze alloy casting material, the primary crystalline α-Cu greatly grows in a dendrite form and produces an inhomogeneous metal structure with respect to the eutectoid structure. Thus, the bronze alloy casting material has a drawback that microcracks are easily generated on the copper alloy sliding surface due to metal fatigue accumulation between the primary crystalline α and the eutectoid structure in an application of a high speed/high surface pressure sliding in which a rotational direction on a thrust surface of a hydraulic motor or the like frequently fluctuates. As described above, in the technology of Patent Document 5, there was room for improvement in microcrack resistance due to production of the inhomogeneous metal structure, low alloy hardness (Brinell hardness) and the like. Also, the trend toward lead-free in the industrial field is inevitable, and needs for low-lead alloys as a tentative measure are low.

The present invention has been proposed in view of such conventional circumstances, and an object of the present invention is to achieve fining of primary crystalline α by crystallizing inhomogeneous solidification nuclei at a temperature higher than a crystallization temperature of the primary crystalline α, to solve inhomogeneity of a cast structure in a bronze alloy. Another object of the present invention is to provide a bronze alloy and a sliding member having a high industrial utility value, by which addition amounts of expensive elements or elements inhibiting castability can also be reduced, and a manufacturing cost can be reduced, and to provide a method for manufacturing the bronze alloy and the sliding member. A further object of the present invention is to provide a bronze alloy and a sliding member thereof, in which mechanical properties such as tensile strength and hardness, and resistance to microcracks due to metal fatigue are enhanced while being a lead-free material, and high seizure resistance and high adhesive wear resistance against high speed/high surface pressure sliding, which fluctuate on a thrust surface of a hydraulic pump and a cylinder block of a hydraulic motor or the like in a construction machine, are imparted.

The inhomogeneous solidification nuclei are solid particles which do not emerge in a Cu-Sn-based binary equilibrium diagram, and are insoluble in a liquid phase, or are produced at a temperature higher than when the primary crystal crystallizes. Example of the inhomogeneous solidification nuclei include sulfides, nitrides, oxides, borides, and the like. Sulfides, nitrides, oxides and borides present in a liquid phase are produced resulting from impurities, and since their contents are very small, they are nano-sized fine particles, and an effect of fining the bronze alloy cast structure is small.

For bronze alloys, there are an attempt to add elements capable of easily producing oxides or nitrides, such as Ti and Zr at a laboratory level, and an attempt to perform molten metal treatment with a flux containing these elements. However, since the produced inhomogeneous solidification nuclei are fine particles, the effects disappear in a short time, and in an actual production with a long casting time, it is difficult to obtain an effect of fining the cast structure.

As a result of examinations from various perspectives for achieving a lead-free bronze alloy in which inhomogeneous solidification nuclei do not disappear even in actual production with a long casting time and an effect of fining the cast structure is high, the present inventors devised a method for fining the cast structure using a high-melting point intermetallic compound produced in a liquid phase of bronze. Since the intermetallic compound produced in the liquid phase is produced by a reaction of alloy elements contained in a large amount, the intermetallic compound is micron-sized, and the effect of fining the cast structure of the bronze alloy is great.

### Solution to Problem

Incidentally, if a Cu-Sn-based alloy contains iron in an amount equal to or higher than a peritectic-eutectic point (about 3.2%), iron emerges as a primary crystalline austenite (κ phase) in a liquid phase. This primary crystalline austenite hinders growth of a primary crystalline α-dendrite and becomes a solidification nucleus to crystallize a β-phase around the nucleus. The cast structure from which the dendrite has disappeared is fined, and a δ-phase precipitated by eutectoid transformation β→α+δ is fined. However, in a sub-peritectic-eutectic region below the peritectic-eutectic point, the austenite primary crystal tends to grow in a coarse dendrite form as iron increases. When the austenite primary crystal is slowly cooled, Fe₃Sn precipitates and the austenite primary crystal tends to become brittle.

Also, when bronze contains 0.5 mass% or more of iron, free iron crystallizes by peritectic-eutectic reaction and becomes a hard spot to significantly decrease machinability. Thus, generally, in bronze alloys, iron is treated as an impurity, and an iron content is suppressed to less than 0.5 mass%.

The present inventors focused on free iron produced by peritectic-eutectic reaction in bronze, and found that a cast structure was fined without decreasing machinability by crystallizing free iron as an intermetallic compound. The bronze alloy according to claim 1 is characterized in that the crystalized free iron becomes an Fe-Ni-based intermetallic compound and a composite sulfide dissolved in copper sulfide and does not generate hard spots, by adding 1.5 to 6.0 mass% of Fe to a bronze alloy containing 8 to 15 mass% of Sn, 0.5 to 5.0 mass% of Bi, 0.5 to 5.0 mass% of Ni, and 0.08 to 1.2 mass% of S, and the balance Cu and inevitable impurities. Incidentally, in this alloy, about 0.02 to 0.1% of phosphorus can be added to improve castability.

On the other hand, it was found that the Fe-Ni-based intermetallic compound crystallized as long as an Fe content was 0.5% or more in bronze and suppressed production of adhered particles on a friction surface even if the crystallization amount was small, and on the friction surface, a deteriorated layer formed by kneading and bond of the adhered particles was hardly produced. This is remarkable during high speed sliding with a friction velocity exceeding 5 m/second. Note that if the deteriorated layer is hardly produced on the friction surface, seizure resistance and wear resistance are improved.

The present invention provides a bronze alloy excellent in seizure resistance and frictional wear property, seizure resistance, and microcrack resistance by adjusting contents of Fe, Ni and sulfur using eutectoid transformation of bronze.

The present inventors found the following effects. Nickel extends a solid solubility limit of a Cu-Sn-based alloy, and when added simultaneously with Fe, nickel causes a primary crystalline austenite (κ phase) in a liquid phase to change into an Fe-Ni-based intermetallic compound to homogeneously disperse the Fe-Ni-based intermetallic compound in the structure, and thereby a Brinell hardness (HB) of the alloy is improved. Then iron in an amount equal to or larger than the peritectic-eutectic point is added to bronze which is composed mainly of copper and tin and coagulates in a dendrite form, to generate the primary crystalline austenite (κ phase) in the liquid phase. This primary crystalline austenite hinders growth of a primary crystalline α-dendrite, and becomes a solidification nucleus to crystallize a β-phase around the nucleus. The cast structure from which the dendrite had disappeared was fined, and a δ-phase precipitated by eutectoid transformation β→α+δ was refined. Sulfur which inhibits diffusion of tin in copper and decreases a solid solubility limit of an α-copper to enhance coagulating segregation is added to generate a large amount of a γ-copper from a β-copper. Furthermore, small amounts of bismuth, nickel and iron are simultaneously added to suppress production of a δ-copper and to decrease a eutectoid transformation temperature. Thereby, a eutectoid structure in which a flaky Cu-Sn-Ni-based intermetallic compound precipitates in the α-copper and the Fe-Ni-based intermetallic compound and a copper-iron-based composite sulfide are dispersed can be easily and stably generated.

The bronze alloy of the present invention is composed mainly of copper and tin, and characteristically it is a metal structure having a eutectoid structure in which a fine flaky copper-tin-based intermetallic compound precipitates in the α-copper and an Fe-Ni-based intermetallic compound and a Cu-Fe-S-based composite sulfide are dispersed. Furthermore, characteristically the bronze alloy is a bronze alloy in which the β-copper is generated, and is controlled to include the eutectoid structure by simultaneously alloying four elements, nickel, bismuth, sulfur, and iron.

The bronze alloy of the present invention contains 0.5 to 5.0 mass% of Ni and 1.5 to 6.0 mass% or 0.5 to 1.5 mass% of Fe. This is a result of limiting a component range where properties required for achieving the following objects can be obtained in the bronze alloy casting of the present invention.

When an Ni content is within a range of 0.5 to 1.5 mass% and an Fe content is within a range of 0.5 to 1.5 mass%, an amount of the precipitated flaky Cu-Sn-Ni-based intermetallic compound is small, and a braking elongation of the bronze alloy is high. However, if the Fe content is less than 1.0 mass%, an effect of fining the cast structure is low, and the application of the alloy is limited to small-size cylinder blocks. On the other hand, if the Fe content is 6.0 mass% or more, the Cu-Fe-S-based composite sulfide becomes coarse, and although the cast structure is fined, the fining is insufficient. However, when the Ni content is 0.5 to 5.0 mass% and the Fe content is 1.5 to 6.0 mass%, machinability does not decrease, and a fine structure in which an intermetallic compound and a composite sulfide are dispersed in a eutectoid structure is formed, and the alloy can also be suitably used for a large-size cylinder block. The bronze alloy according to claim 1 is characterized in that a eutectoid structure having a fine structure in which an intermetallic compound and a composite sulfide are homogeneously dispersed by fining a cast structure is generated.

Also, if bronze contains 0.5 mass% or more of Fe and Ni, an Fe-Ni-based intermetallic compound crystallizes, production of adhered particles on a friction surface is suppressed, so that a deteriorated layer is hardly formed on the friction surface. That means, a resistance to adhesive wear is improved and a durable surface pressure is increased. On the other hand, during high-speed sliding, the alloy is sensitive to a contacting state between the friction surfaces, i.e. a so-called contact surface state, and seizure is easily caused even by a slight fluctuation of the surface pressure until a good contact surface is formed. If a hardness of the bronze alloy is high, it takes a long time to form a good contact surface, i.e. to obtain so-called initial fitness. Thus, the bronze alloy for high-speed sliding preferably has a Brinell hardness (HB) of 110 or lower.

In a bronze alloy containing 8 to 15 mass% of Sn, if Ni and Fe are contained in an amount of 1.5 mass% or more, it is difficult to obtain an HB of 110 or lower, and Ni and Fe contents should be respectively limited to within a range of 0.5 to 1.5 mass% for satisfying the initial fitness and the adhesive wear resistance required for the bronze alloy for high-speed sliding. The bronze alloy according to claim 2 is characterized in that the hardness of the bronze alloy is adjusted and the initial fitness is improved.

Additionally, in the bronze alloy casting of the present invention, the dispersed state of the Fe-Ni-based intermetallic compound in the metal structure is affected by a mass ratio of the Fe content to the Ni content (Fe/Ni). Addition amounts of Ni and Fe are devised to solve problems of hard spot generation due to addition of Fe, thereby microcracks hardly occur, and the Brinell hardness (HB) is improved. Furthermore, crystallization unevenness of the intermetallic compound and the composite sulfide hardly occurs, and a metal structure in which they are homogeneously dispersed can be obtained. The bronze alloy according to claim 3 is characterized in that the Fe/Ni is within a range of 0.7 to 1.5, and an Fe primary crystal generated during casting precipitates as an Fe-Ni-based intermetallic compound.

Also, the aforementioned bronze alloy is excellent in frictional wear property and seizure resistance, and can be used as a sliding member. The sliding member according to claim 4 is characterized in that a sliding surface is formed of the aforementioned bronze alloy. Alternatively, like the multi-layer sliding member according to claim 5, the sliding member characteristically has a multi-layer structure in which the aforementioned bronze alloy is fusion-joined to a sliding surface of an iron-based material. The sliding member may be in a form of a cast article whole of which is made using the bronze alloy of the present invention, or may be fusion-joined to a part of a steel member by casting, buildup welding, or the like. Alternatively, the sliding member may have a multi-layer structure in which only the bronze alloy is melted and the sliding surface is lined with the bronze alloy by a method such as thermal spraying. Also, it is possible to form a multi-layer sliding member according to claim 6 by a process that a raw material powder is prepared so as to contain the same components as in the bronze alloy of the present invention, and sintered and joined with an iron-based member in a vacuum furnace or a reducing atmosphere furnace.

### Effects of Invention

The bronze alloy of the present invention having the aforementioned configuration has seizure resistance comparable to that of lead-bronze, and is excellent in frictional wear property, mechanical property, machinability and hardness, and is useful as especially an industrial lead-bronze-alternative bearing copper alloy material used at a high pressure and a high speed. Also, using phase transformation and peritectic-eutectic reaction of the bronze alloy described in the present invention, a bronze alloy having a high industrial utility value can be provided, e.g. because addition amounts of expensive elements such as bismuth and elements inhibiting castability such as sulfur can be minimized, a manufacturing cost can be reduced, and productivity can be improved, compared to the prior art using solid lubrication of a produced compound or a crystallization phase.

Also, the sliding member of the present invention (e.g. a cylinder block for a hydraulic pump) is characteristically formed on a sliding surface by sticking the aforementioned copper alloy to a steel body by fusion-joining, press-fitting or the like (multi-layer sliding member). Since the aforementioned copper alloy is excellent in frictional wear property and seizure resistance, a sliding member using this copper alloy exhibits an excellent performance, e.g. an excellent bearing property under fluctuating high loads and high-speed sliding.

### Description of Embodiments

The bronze alloy to which the present invention is applied contains Cu and Sn as main components, and besides, Ni, Fe, Bi and S (sulfur) as essential elements, and other components are composed of inevitable impurities (less than 0.3 mass% of elements, with the proviso that the S content is less than 0.08 mass%). The reason for limiting these ranges is as follows.

### [Sn: 8 to 15 mass%]

Sn dissolves in a Cu base to improve a tensile strength and a hardness of the bronze alloy. If the Sn content is less than 8 mass%, a strength and a hardness required for a sliding member cannot be obtained and a wear resistance is decreased. If the Sn content is more than 15 mass%, a large amount of Cu-Sn-Ni-based intermetallic compound is produced, and the alloy becomes brittle, and as a result, a microcrack resistance is decreased. A lower limit of the Sn content is preferably 9.0 mass%, and an upper limit is preferably 13.5 mass%. A range of 10.0 to 13.0 mass% is more preferable.

### [Ni: 0.5 to 5.0 mass%]

Ni causes an Fe primary crystalline austenite generated in a liquid phase to change into an Fe-Ni-based intermetallic compound to prevent decrease in machinability. Also, Ni has an effect of homogeneously dispersing a crystallization phase in a structure, and dissolves together with Sn in a Cu base to improve a Brinell hardness (HB) of the bronze alloy. If the Ni content is less than 0.5 mass%, there is no effect of preventing decrease in machinability and no effect of homogeneously dispersing the crystallization phase in the structure. If the Ni content is more than 5.0 mass%, fluidity of a molten metal is decreased, and castability is poor. A range of the Ni content is preferably 0.5 to 1.5 mass% for a high-speed sliding application with an emphasis on initial fitness. For an application of fining and homogenizing a cast structure with an emphasis on the microcrack resistance, the range of the Ni content is preferably 2.0 to 4.5 mass%.

### [Fe: 1.5 to 6.0 mass%, or 0.5 to 1.5 mass%]

Fe in bronze produces a primary crystalline austenite (free iron) by a peritectic-eutectic reaction. The free iron hinders growth of a Cu primary crystalline α-dendrite, and becomes an inhomogeneous solidification nucleus to fine the cast structure. If the Fe content is less than 1.5 mass%, there is no effect of fining the cast structure. If the Fe content is more than 6.0 mass%, the primary crystalline austenite is coarse, and there is no effect of fining the cast structure. The range of the Fe content is more preferably 2.0 to 5.5 mass%. On the other hand, if the Fe content is 0.5 mass% or more, the Fe-Ni-based intermetallic compound required for improving a frictional wear property crystallizes in the bronze alloy, and if the Fe content is 1.5 mass% or more, the bronze alloy is hard, and the initial fitness decreases. Consequently, the range of the Fe content is preferably 0.5 to 1.5 mass% for a high-speed sliding application with an emphasis on initial fitness.

### [Bi: 0.5 to 5.0 mass%]

Bi is a low melting point metal element which has properties similar to those of Pb and does not dissolve in Cu, and improves the machinability and the frictional wear property of the bronze alloys. However, Bi tends to segregate at a grain boundary to decrease a high-temperature strength, and if Bi is excessively contained, cracks are generated due to heat generation during machining to decrease a mechanical property. If the Bi content is less than 0.5 mass%, there is no effect of improving the machinability and the frictional wear property. If the Bi content is more than 5.0 mass%, the Bi phase excessively increases to decrease the mechanical property. The range of the Bi content is more preferably 1.0 to 3.5 mass%.

### [S: 0.08 to 1.2 mass%]

S binds with Cu and Fe to form a composite sulfide of copper and iron, and the composite sulfide acts as an extreme-pressure additive for preventing seizure of a sliding surface. If the S content is less than 0.08 mass%, an amount of the produced composite sulfide is small, resulting in a low effect. If the S content is more than 1.2 mass%, a reactant gas is generated during solidification, and a sound casting cannot be manufactured. The range of the S content is more preferably 0.15 to 0.6 mass%.

### Examples

Next, specific examples of the bronze alloy and the sliding member according to the present invention will be explained based on experimental results.

Bronze alloys having compositions presented in Table 1 were smelted in a high-frequency melting furnace, and casted into shell sand molds for JIS tensile test pieces No. A, and then machined into JIS tensile test pieces No. 4. These test pieces were measured for tensile strength (MPa), braking elongation (%), and Brinell hardness (HB), and metal structure crystal grain size.

**Table 1**

| No. | Cu | Sn | Ni | Fe | Bi | S | P | Pb | Zn | Mn |
|---|---|---|---|---|---|---|---|---|---|---|
| 1 | Balance | 11.03 | 1.47 | 3.38 | 1.24 | 0.36 | 0.07 | 0.02 | <0.00 5 | <0.005 |
| 2 | Balance | 11.22 | 1.60 | 1.48 | 1.91 | 0.34 | 0.06 | 0.05 | 0.01 | 0.01 |
| 3 | Balance | 11.23 | 1.46 | 3.39 | 2.31 | 0.35 | 0.09 | 0.02 | <0.00 5 | <0.005 |
| 4 | Balance | 9.81 | 3.65 | 3.65 | 2.11 | 0.35 | 0.09 | 0.03 | <0.00 5 | 0.01 |
| 5 | Balance | 11.69 | 3.42 | 3.72 | 2.46 | 0.40 | 0.085 | 0.01 | <0.00 5 | <0.005 |
| 6 | Balance | 11.50 | 5.96 | 6.16 | 2.27 | 0.46 | 0.08 | 0.01 | <0.00 5 | <0.005 |
| 7 | Balance | 10.80 | 2.46 | 2.80 | 2.09 | 0.37 | 0.08 | 0.04 | 0.18 | <0.005 |
| 8 | Balance | 11.02 | 1.06 | 1.88 | 1.97 | 0.28 | 0.03 | 0.05 | <0.00 5 | <0.005 |
| 9 | Balance | 9.59 | 0.97 | 0.89 | 2.04 | 0.28 | 0.02 | 0.02 | 0.01 | <0.005 |
| 10 | Balance | 10.09 | 0.97 | 0.80 | 1.87 | 0.34 | 0.04 | 0.02 | 0.23 | <0.005 |
| 11 | Balance | 10.17 | 0.98 | 0.41 | 2.00 | 0.35 | 0.04 | 0.04 | 0.01 | <0.005 |
| Comparative Material 1 | Balance | 11.44 | 1.57 | <0.00 5 | 0.92 | 0.31 | 0.06 | 0.03 | 0.01 | <0.005 |
| Comparative Material 2 | Balance | 9.03 | 0.94 | <0.00 5 | 2.01 | 0.25 | 0.07 | 0.01 | <0.00 5 | <0.005 |
| Comparative Material 3 | Balance | 9.45 | 1.54 | <0.00 5 | 2.08 | 0.26 | 0.10 | 0.01 | <0.00 5 | <0.005 |
| Comparative Material 4 | Balance | 9.66 | 2.50 | <0.00 5 | 2.00 | 0.31 | 0.07 | <0.00 5 | <0.00 5 | <0.005 |
| Comparative Material 5 | Balance | 9.5 | 3.52 | <0.00 5 | 2.11 | 0.30 | 0.07 | <0.00 5 | <0.00 5 | <0.005 |
| Comparative Material 6 | Balance | 10.9 | 1.47 | 0.01 | 0.12 | 0.72 | 0.08 | 0.02 | <0.00 5 | <0.005 |
| Comparative Material 7 | Balance | 11.53 | 1.68 | <0.00 5 | 3.82 | 0.33 | 0.06 | 0.04 | 0.04 | <0.005 |
| Comparative Material 8 | Balance | 13.08 | 1.69 | 0.01 | 0.01 | 0.01 | 0.03 | 9.66 | 0.08 | <0.005 |
| Comparative Material 9 | Balance | 10.56 | 0.19 | <0.00 5 | 0.02 | 0.01 | 0.03 | 9.86 | 0.02 | <0.005 |

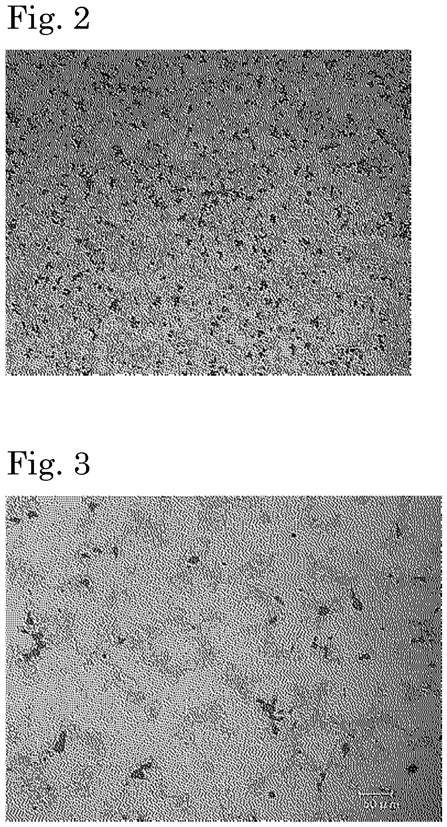

Comparative Material 1 has a lead-free composition and is different from Examples in that it does not contain Fe. Comparative Materials 8 and 9 are existing lead-bronze-based alloys. Fig. 2 shows a metal structure of Example 5, and Fig. 3 shows a metal structure of Comparative Material 1.

In the metal structure of Example 5, Fe precipitated while forming a compound with Ni, and an intermetallic compound and a composite sulfide were homogeneously dispersed in a particulate form in the metal structure. A primary crystal of an α-copper became fine and an entire surface of the α-copper had a fine eutectoid structure. On the other hand, in Comparative Material 1, the primary crystalline α-copper greatly grew and formed an inhomogeneous metal structure with the eutectoid structure, and a precipitated compound (copper sulfide) was large and sparsely dispersed. Thus, it is clear that a dramatic effect for homogenizing the metal structure can be obtained by adding almost equal amounts of Fe and Ni to a lead-free bronze of the present invention.

The tensile strength (MPa) and the braking elongation (%) were measured in accordance with JIS Z2241, and the Brinell hardness was measured in accordance with a provision of JIS Z2243, and they are presented in Table 2. The crystal grain size was measured by a cutting method, and typical values are shown in Table 2.

**Table 2**

| No. | Tensile Strength (N/mm²) | Braking Elongation (%) | Brinell Hardness (HB) | Crystal Grain Size (µm) |
|---|---|---|---|---|
| 1 | 301 | 2 | 128 | 28 |
| 2 | 254 | 1 | 107 | 80 |
| 3 | 272 | 2 | 124 | 35 |
| 4 | - | - | 134 | 40 |
| 5 | 316 | 2 | 148 | 18 |
| 6 | 277 | 1 | 150 | 70 |
| 7 | - | - | 116 | 80 |
| 8 | 280 | 3 | 110 | 55 |
| 9 | 264 | 6 | 103 | 85 |
| 10 | 285 | 4 | 100 | 90 |
| 11 | 274 | 4 | 98 | 130 |
| Comparative Material 1 | 234 | 3 | 107 | 180 |
| Comparative Material 2 | 300 | 17 | 96 | 310 |
| Comparative Material 3 | 262 | 4 | 96 | 330 |
| Comparative Material 4 | 300 | 4 | 100 | 220 |
| Comparative Material 5 | 264 | 3 | 106 | 140 |
| Comparative Material 6 | 255 | 4 | 91 | 280 |
| Comparative Material 7 | 306 | 3 | 113 | 130 |
| Comparative Material 8 | 274 | 5 | 110 | 110 |
| Comparative Material 9 | 295 | 28 | 90 | 160 |

In results of the mechanical property tests and the crystal grain size measurement presented in Table 2, all of the bronze alloys containing more than 2.0 mass% of Fe according to the present invention have Brinell hardnesses of higher than 120, indicating that a hardness higher than that of a comparative material containing almost the same amount of Sn can be obtained. Incidentally, in No. 2 and No. 8 to 11 containing 2.0 mass% or less of Fe, the Brinell hardnesses did not exceed 110. Also, as shown in Fig. 2 and Fig. 3, the primary crystal of the α-copper became fine when the Fe content was more than 1.5 mass%, thus the crystal grain size was smaller than that of the comparative material by one digit. In No. 5 containing about 3.5 mass% of Fe and Ni, a crystal grain size was not more than one-tenth that of a bronze alloy not according to the present invention (Comparative Material 1). Also, it can be seen that the Ni content and the Bi content also affect the crystal grain size.

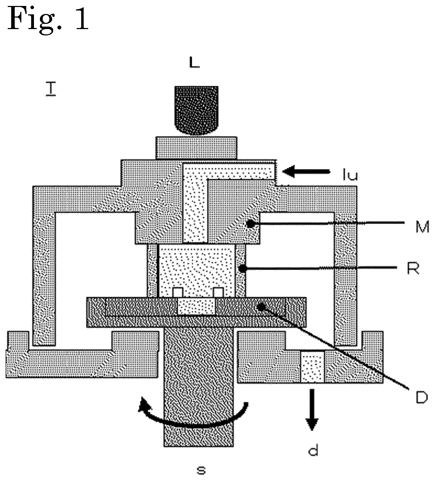

Furthermore, some of the sample materials (No. 5, No. 9 (Examples), and Comparative Materials 1, 7, 8 and 9 among the bronze alloys in Table 1) were casted into a cylindrical mold of ϕ60×150 mm, then machined into a ring test piece R of ϕ25.5×ϕ20×20 mm, and subjected to a ring/disk-type plane sliding test using a tester T shown in Fig. 1 (Fig. 1). In the plane sliding test, a 10 W class diesel engine oil heated to 60°C was used as a lubricating oil lu. As a friction material disk D, SCM420 steel material having a hardness adjusted to HRC58 by carburizing and quenching was used. Incidentally, symbol M represents a torque meter, and symbol d represents a drain oil (Fig. 1). For these test pieces R, a seizure limit PV value (N/mm²·m/min) and a specific wear rate (mm/(N/cm²·m/min·hr)) were measured. The limit PV value was measured by a process that the test piece R was pressed against the disc D rotating around a rotation axis s at a constant speed of 10 m/sec, the test piece R was left under running-in operation at 1.25 MPa for 10 minutes, then a load L was continuously increased with a gradient of 0.4 MPa/min, and it was judged that there was seizure when rotation abnormality or abnormal noise occurred, or the test piece temperature reached 120°C or higher, or a friction coefficient reached 0.2. The specific wear rate was measured by a process that the test piece R was pressed against the disc D rotating around the rotation axis s at a constant speed of 5 or 10 m/sec, the test piece R was left under running-in operation at 2.5 MPa for 10 minutes, then subjected to a friction test at a constant pressure of 6.4 MPa for 8 hours, and the specific wear rate was calculated from a dimensional change between before and after the test. These results are presented in Tables 3 and 4.

**Table 3**

| No. | Seizure Limit PV Value N/mm² • m / min | Specific Wear Rate mm / (N / cm² • m / min • hr) |
|---|---|---|
| 5 | 6191 | 1.3 × 10⁻⁸ |
| 9 | 6092 | 2.5 × 10⁻⁸ |
| Comparative Material 1 | 4900 | 6.4 × 10⁻⁸ |
| Comparative Material 7 | 5566 | 5.1 × 10⁻⁸ |
| Comparative Material 8 | 5834 | 2.9 × 10⁻⁸ |
| Comparative Material 9 | 5389 | 3.2 × 10⁻⁸ |

**Table 4**

| No. | Seizure Limit PV Value N/mm² • m / min | Specific Wear Rate mm / (N / cm² • m / min • hr) |
|---|---|---|
| 5 | 5912 | 4.8 × 10⁻⁹ |
| 9 | 6395 | 1.5 × 10⁻⁹ |
| Comparative Material 1 | 2121 | 1.8 × 10⁻⁷ |
| Comparative Material 7 | 5047 | 5.6 × 10⁻⁹ |
| Comparative Material 8 | 6414 | 4.0 × 10⁻⁹ |
| Comparative Material 9 | 6452 | 3.0 × 10⁻⁹ |

In results of the plane sliding test at a friction velocity of 5 m/sec presented in Table 3, the bronze alloys No. 5 and 9 according to the present invention exhibited seizure limit PV values exceeding 6000, which were higher than those of the lead-free bronze alloy-based Comparative Materials 1 and 7 and the lead-bronze-based Comparative Materials 8 and 9, indicating that the specific wear rates of the bronze alloys No. 5 and 9 were also low. Also in results of the plane sliding test at a friction velocity of 10 m/sec presented in Table 4, the bronze alloys No. 5 and 9 exhibited seizure limit PV values and specific wear rates equivalent to those of the lead-bronze-based Comparative Materials 8 and 9, and particularly in No. 9 having Fe and Ni contents limited to 1.5 mass% or lower, the specific wear rate was lower than that of the lead-bronze-based Comparative Materials 8 and 9. It is considered that this is because preferable initial fitness was obtained even at a high friction velocity by suppressing increase in the hardness of the bronze alloy.

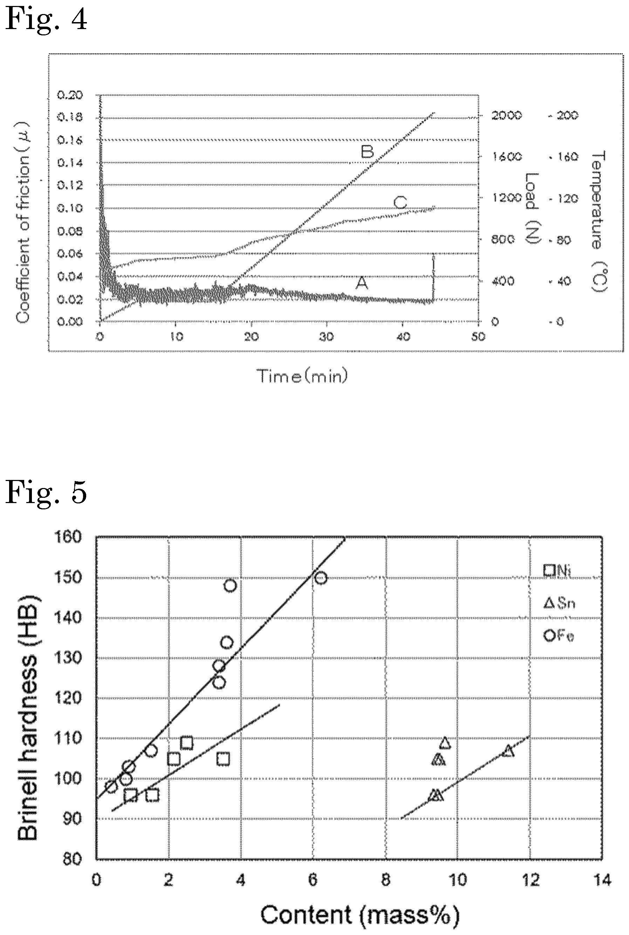

Fig. 4 shows an example of seizure resistance test data of the bronze alloy No. 5 according to the present invention at a friction velocity of 10 m/sec. The abscissa represents time (m). The ordinate represents a frictional coefficient (µ), a load (N), and a temperature (°C), and each of them corresponds to a frictional coefficient data (symbol A), a load data (symbol B), and a test piece temperature data (symbol C) respectively in the graph. A graph with a wide fluctuation range represents a change in the frictional coefficient associated with increase of the load. The seizure limit PV value is calculated from a load at which the friction coefficient steeply rises. The difference in the seizure limit PV value refers to a difference in a test piece-pressing load. Because of the high-speed sliding with a friction velocity of 10 m/sec, as soon as an oil film on the friction surface is discontinued, seizure occurs. Thus, the reason why there is a difference of the bronze alloys No. 5 and 9 according to the present invention from the lead-free bronze alloy-based Comparative Materials 1 and 7 in Table 3 may be because deposition of transferred substances was suppressed by crystallization of the Fe-Ni-based intermetallic compound and change of a microstructure in the eutectoid structure, and retention of the lubricating oil was improved.

### Each Additive Element and Hardness

In the bronze alloy according to the present invention, elements which greatly affect the hardness of the alloy are Sn, Fe, and Ni. Fig. 5 presents hardnesses of the sample materials organized in terms of amounts of the additive elements. The abscissa represents an addition amount (mass%), and the ordinate represents a Brinell hardness (HB). An inclination of an approximate straight line of Fe is twice as large as inclinations of approximate straight lines of Sn and Ni, and thus even a small amount of Fe has a high effect of increasing the hardness. It is considered that this is because Sn and Ni dissolve in the Cu base to strengthen the solid solution, whereas Fe binds to Ni to form a fine intermetallic compound, which homogeneously precipitates in the metal structure to dispersively strengthen the solid solution.

In Table 2, No. 1 to No. 8 according to the present invention also exhibit effects of improving the hardnesses compared to that of Comparative Material 1, and of fining the crystal grains. Additionally, Comparative Material 1 is inferior in both the hardness and the crystal grain size to No. 1. Furthermore, in No. 6 containing 6.16 mass% of Fe and 5.96 mass% of Ni, and No. 2 containing 1.48 mass% of Fe and 1.60 mass% of Ni, braking elongation decreases. For this reason, the Ni content is 1.5 to 5.0 mass%, and the Fe content is preferably 1.5 to 5.5 mass%. Also, ratios of Fe and Ni are important, and the Fe/Ni ratio is in a range of 0.7 to 1.5. In this range, the primary crystalline austenite produced by peritectic-eutectic reaction of Fe binds to Ni to form a fine intermetallic compound, which homogeneously precipitates in the metal structure, and thereby occurrence of hard spots is suppressed.

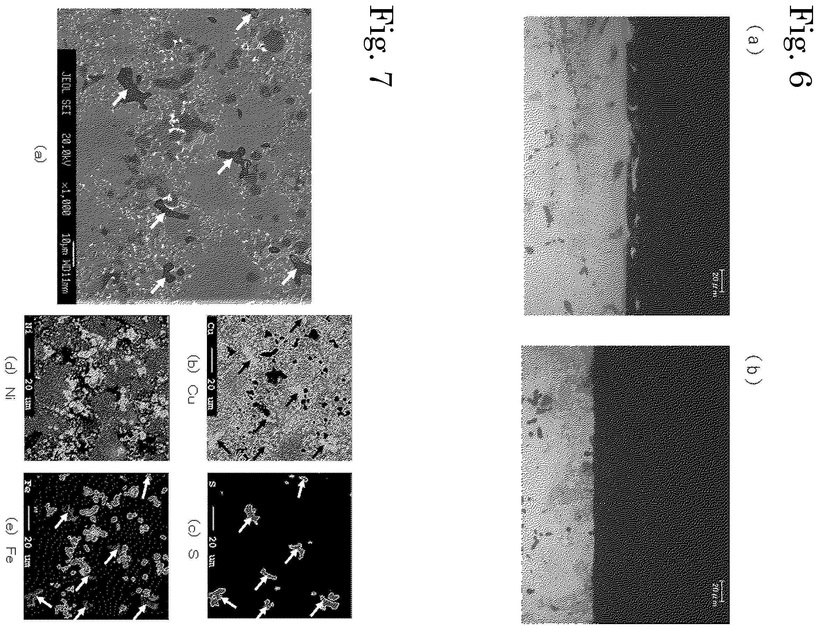

Fig. 6 shows sliding surface states of the bronze alloys of Comparative Material 1 (Fig. 6a, left side) and Example 5 (Fig. 6b, right side) after a wear test. The alloy according to the present invention has a high adhesive wear resistance because of high hardness, and has no transferred substance on the sliding surface. Also, the Fe-Ni-based intermetallic compound homogeneously precipitating in the metal structure is considered to hinder deposition of the transferred substance and improve the adhesive wear resistance. On the other hand, deposition of the stripe-like transferred substance is confirmed on the sliding surface of Comparative Material 1 having a low hardness. Since the transferred substance is brittle and grows into microcracks when receiving a strong frictional force, the inventive alloy on which the transferred substance hardly deposits was confirmed to be excellent in microcrack resistance.

### Identification of Precipitate in Metal Structure

Fig. 7 shows electron micrographs of identified substances precipitated in the bronze alloy of Example 5. Fig. 7a shows an analytical field, Fig. 7b shows an identified copper, Fig. 7c shows an identified sulfur, Fig. 7d shows an identified nickel, and Fig. 7e shows an identified iron. In the left analytical field, the precipitates indicated by arrows correspond to the sulfur signals in the right figure, shapes of copper and iron are raised, and therefore the precipitates are composite sulfides. Many round precipitates other than sulfides are also observed. These precipitates other than sulfides are found only in the bronze alloy according to the present invention, in which shapes of nickel and iron are raised, indicating that these precipitates are Fe-Ni-based intermetallic compounds. As described above, by practicing the present invention, fine Fe-Ni-based intermetallic compounds other than sulfides precipitate, and the intermetallic compounds generated in the metal structure complicate the microstructure of the metal structure synergistically with the Cu-Sn-Ni-based precipitates in the eutectoid structure. The difference in precipitates generated in this metal structure is considered to be the reason why the bronze alloy of the present invention has a high seizure limit PV value, and excellent adhesive wear resistance and microcrack resistance.

As described above, the present invention can provide a copper alloy-based sliding member which has an excellent seizure resistance equal to or higher than that of a lead-bronze-based alloy while being a bronze alloy having a lead-free composition and is furthermore excellent in mechanical strength and microcrack resistance.

### Brief Description of Drawings

Fig. 1 shows a schematic drawing of a tester used for a ring/disk-type plane sliding test.
Fig. 2 shows a microphotograph of a metal structure in Example 5.
Fig. 3 shows a microphotograph of a metal structure in Comparative Material 1.
Fig. 4 shows an example of seizure resistance test data of a bronze alloy according to the present invention.
Fig. 5 shows a graph in which hardnesses of sample materials are organized in terms of amounts of the additive elements.
Fig. 6 shows photographs of sliding surface states of bronze alloys in Comparative Material 1 and Example 5 after a wear test.
Fig. 7 shows electron micrographs of identified substances precipitated in the bronze alloy in Example 5.

### Reference Numerals

- T: Tester
- L: Load
- Lu: Lubricating oil
- M: Torque meter
- R: Test piece
- D: Disk
- d: Oil drain port
- S: Rotation axis

## Claims

1. A bronze alloy containing copper (Cu), tin (Sn), bismuth (Bi), nickel (Ni), sulfur (S), and iron (Fe), wherein:
the bronze alloy contains 8 to 15 mass% of Sn, 0.5 to 5.0 mass% of Bi, 0.5 to 5.0 mass% of Ni, 0.08 to 1.2 mass% of S, 0.5 to 6.0 mass% of Fe, and a balance consists of Cu and inevitable impurities, wherein a mass ratio of an Fe content to an Ni content (Fe/Ni) is 0.7 to 1.5; and
the bronze alloy has a eutectoid structure in which a fine flaky copper-tin-based intermetallic compound precipitates in the α-copper and an iron-nickel-based intermetallic compound and a copper-iron-based sulfide complex are dispersed.

2. The bronze alloy according to claim 1, wherein Ni and Fe is limited to a range within 0.5 to 1.5 mass%.

3. A method for manufacturing the bronze alloy of claim 1, comprising:
Adding 0.5 to 6.0 mass% of Fe to a bronze alloy containing 8 to 15 mass% of Sn, 0.5 to 5.0 mass% of Bi, 0.5 to 5.0 mass% of Ni, and a mass ratio of an Fe content to an Ni content (Fe/Ni) is in the range of 0.7 to 1.5.

4. A sliding member, wherein a sliding surface is formed of the bronze alloy according to any one of claims 1 to 2.

5. A multi-layer sliding member, wherein the bronze alloy according to any one of claims 1 to 3 is melt-joined with a sliding surface of an iron-based material, or only the bronze alloy according to any one of claims 1 to 2 is melted and the sliding surface of the iron-based material is lined with the bronze alloy by a method of thermal spraying.

## Patentansprüche

1. Bronzelegierung, enthaltend Kupfer (Cu), Zinn (Sn), Bismut (Bi), Nickel (Ni), Schwefel (S) und Eisen (Fe), wobei:
die Bronzelegierung 8 bis 15 Masse-% Sn, 0,5 bis 5,0 Masse-% Bi, 0,5 bis 5,0 Masse-% Ni, 0,08 bis 1,2 Masse-% S, 0,5 bis 6,0 Masse-% Fe enthält und die Differenz bis zu 100 Masse-% aus Cu und unvermeidbaren Verunreinigungen besteht, wobei ein Masseverhältnis aus einem Fe-Gehalt zu einem Ni-Gehalt (Fe/Ni) 0,7 bis 1,5 beträgt; und
die Bronzelegierung ein eutektoides Gefüge aufweist, in dem eine feine plättchenförmige intermetallische Verbindung auf Basis von Kupfer und Zinn in dem α-Kupfer ausgefällt ist und eine intermetallische Verbindung auf Basis von Eisen und Nickel und ein Sulfidkomplex auf Basis von Kupfer und Eisen fein verteilt sind.

2. Bronzelegierung nach Anspruch 1, wobei Ni und Fe auf einen Bereich innerhalb von 0,5 bis 1,5 Masse-% begrenzt ist.

3. Verfahren zum Herstellen der Bronzelegierung nach Anspruch 1, umfassend:
Zugeben von 0,5 bis 6,0 Masse-% Fe zu einer Bronzelegierung, die 8 bis 15 Masse-% Sn, 0,5 bis 5,0 Masse-% Bi, 0,5 bis 5,0 Masse-% Ni enthält, und ein Masseverhältnis aus einem Fe-Gehalt zu einem Ni-Gehalt (Fe/Ni) liegt im Bereich von 0,7 bis 1,5.

4. Gleitelement, wobei eine Gleitfläche aus der Bronzelegierung nach einem der Ansprüche 1 bis 2 gebildet ist.

5. Mehrlagiges Gleitelement, wobei die Bronzelegierung nach einem der Ansprüche 1 bis 3 mit einer Gleitfläche aus einem Werkstoff auf Eisenbasis verschmolzen ist oder lediglich die Bronzelegierung nach einem der Ansprüche 1 bis 2 aufgeschmolzen ist und die Gleitfläche aus dem Werkstoff auf Eisenbasis mit einem thermischen Spritzverfahren mit der Bronzelegierung überzogen ist.

## Revendications

1. Alliage de bronze contenant du cuivre (Cu), de l'étain (Sn), du bismuth (Bi), du nickel (Ni), du soufre (S), et du fer (Fe), dans lequel :
l'alliage de bronze contient 8 à 15 % en masse de Sn, 0,5 à 5,0 % en masse de Bi, 0,5 à 5,0 % en masse de Ni, 0,08 à 1,2 % en masse de S, 0,5 à 6,0 % en masse de Fe, et un reste est constitué de Cu et des impuretés inévitables, un rapport en masse d'une teneur en Fe à une teneur en Ni (Fe/Ni) étant de 0,7 à 1,5 ; et
l'alliage de bronze a une structure eutectoïde dans laquelle un fin composé intermétallique à base de cuivre-étain floconneux précipite dans l'α-cuivre et un composé intermétallique à base de fer-nickel et un complexe de sulfure à base de cuivre-fer sont dispersés.

2. Alliage de bronze selon la revendication 1, dans lequel le Ni et le Fe sont limités à une plage de 0,5 à 1,5 % en masse.

3. Procédé de fabrication de l'alliage de bronze selon la revendication 1, comprenant :
l'addition de 0,5 à 6,0 % en masse de Fe à un alliage de bronze contenant 8 à 15 % en masse de Sn, 0,5 à 5,0 % en masse de Bi, 0,5 à 5,0 % en masse de Ni et un rapport en masse d'une teneur en fer à une teneur en Ni (Fe/Ni) se situe dans la plage de 0,7 à 1,5.

4. Elément de coulissage, dans lequel une surface de coulissage est formée de l'alliage de bronze selon l'une quelconque des revendications 1 à 2.

5. Elément de coulissage multicouches, dans lequel l'alliage de bronze selon l'une quelconque des revendications 1 à 3 est joint par fusion avec une surface de coulissage d'un matériau à base de Fe ou seulement l'alliage de bronze selon l'une quelconque des revendications 1 à 2 est fondu et la surface de coulissage du matériau à base de Fe est revêtue avec l'alliage de bronze par un procédé de pulvérisation thermique.
